# EUROPEAN PATENT APPLICATION

(11) **EP 4 116 558 A2**
(43) Date of publication of application: **11.01.2023**
(21) Application number: 22173859.4
(22) Date of filing: 17.05.2022
(51) Int. Cl.: F02C 7/232

(54) **VARIABLE DISPLACEMENT METERING SYSTEM WITH MODE SELECTION**

(30) Priority: 18.05.2021 US 202117324009
(71) Applicant: Hamilton Sundstrand Corporation, Charlotte, NC 28217-4578 (US)
(72) Inventor: SUSCA, Ryan, Windsor, 06095 (US); O'RORKE, Morgan, West Hartford, 06119 (US); RUTAR, Matej, Manchester, 06050 (US); HAUGSJAAHABINK, Todd, Springfield, 01118 (US); NI, Weishun William, Rockton, 61072 (US); HARDER, Benjamin T., Sycamore, IL (US); SHOOK, Ryan, Rockford, IL (US)
(74) Representative: Dehns

(57) **Abstract**

A fuel metering system includes a pump with an inlet and an outlet, a first flow path (30) including a first valve fluidically connected to the outlet of the pump, and a second flow path (40) including a second valve fluidically connected to the outlet of the pump, a third valve, and a fourth valve. An electrohydraulic servo valve in a first position hydraulically connects the inlet of the pump to the first, third, and fourth valves to close the first valve, open the third valve, open a first window of the fourth valve, and close a second window of the fourth valve. The electrohydraulic servo valve in a second position hydraulically connects the outlet of the pump to the first, third, and fourth valves to open the first valve, close the third valve, close the first window of the fourth valve, and open the second window of the fourth valve.

## Description

### BACKGROUND

The present disclosure relates to a metering system for pumping fuel, and in particular to a metering system for pumping fuel with a variable displacement pump.

Fuel metering systems supply fuel to an engine of a vehicle. For example, fuel metering systems can supply fuel to a jet turbine engine of an aircraft or to an engine of an automobile. An improved fuel metering system is disclosed hereafter.

### SUMMARY

In one example, a fuel metering system includes a pump with an inlet and an outlet and a first fuel source fluidically connected to the inlet of the pump. A first flow path including a first valve fluidically connected to the outlet of the pump, and a second flow path. The second flow path includes a second valve fluidically connected to the outlet of the pump, a third valve downstream from the second valve, and a fourth valve downstream from the third valve. The fuel metering system also includes an electrohydraulic servo valve hydraulically connecting the inlet and the outlet of the pump to the first, third, and fourth valves. The electrohydraulic servo valve in a first position hydraulically connects the inlet of the pump to the first, third, and fourth valves to close the first valve, open the third valve, open a first window of the fourth valve, and close a second window of the fourth valve. The electrohydraulic servo valve in a second position hydraulically connects the outlet of the pump to the first, third, and fourth valves to open the first valve, close the third valve, close the first window of the fourth valve, and open the second window of the fourth valve.

In another example, a fuel system includes a variable displacement pump with an inlet and an outlet, a main line, and a bypass line. The main line includes a flow sensing valve fluidically connected to the outlet of the variable displacement pump, and a minimum pressure shut off valve downstream from the flow sensing valve. The bypass line includes a bypass valve fluidically connected to the outlet of the variable displacement pump. The fuel system also includes an electrohydraulic servo valve in communication with the flow sensing valve and hydraulically communicating the inlet and the outlet of the variable displacement pump with the bypass valve and the minimum pressure shut off valve. The electrohydraulic servo valve in a first position hydraulically connects the inlet of the variable displacement pump to the bypass valve and the minimum pressure shut off valve to close the bypass valve and open the minimum pressure shut off valve. The electrohydraulic servo valve in a second position hydraulically connects the outlet of the variable displacement pump to the bypass valve and the minimum pressure shut off valve to open the bypass valve and close the minimum pressure shut off valve.

In another example, a method of metering a flow of fuel within in a system includes sensing a temperature of a fuel flow in a main line by a flow sensing valve in the main line downstream from an outlet of a variable displacement pump. Generating a temperature signal that is indicative of the temperature of the fuel flow in the main line with the flow sensing valve with the flow sensing valve. Sensing a linear displacement of the flow sensing valve. Generating with the flow sensing valve a linear displacement signal that is indicative of the linear displacement of the flow sensing valve. The temperature signal that is indicative of the temperature of the fuel flow in the main line is communicated to an electronic engine controller. The linear displacement signal of the linear displacement of the flow sensing valve is communicated to the electronic engine controller. The method also includes communicating a first electronic signal by the electronic engine controller to an electrohydraulic servo valve. The electrohydraulic servo valve hydraulically communicates with an inlet of the variable displacement pump, the outlet of the variable displacement pump, a minimum pressure shut off valve in the main line downstream from the flow sensing valve, and a bypass valve in a bypass line fluidically connected to the outlet of the variable displacement pump. The electrohydraulic servo valve is moved to a first position in response to the first electronic signal. An inlet pressure of the variable displacement pump is communicated by the electrohydraulic servo valve to the minimum pressure shut off valve to open the minimum pressure shut off valve while the electrohydraulic servo valve is in the first position. The inlet pressure of the variable displacement pump is communicated by the electrohydraulic servo valve to the bypass valve to close the bypass valve while the electrohydraulic servo valve is in the first position.

### BRIEF DESCRIPTION OF THE DRAWINGS

FIG. 1 is a schematic diagram of a fuel metering system with a servo valve in a first position.
FIG. 2 is a schematic diagram of the fuel metering system with the servo valve in a second position.

While the above-identified figures set forth one or more embodiments of the present disclosure, other embodiments are also contemplated, as noted in the discussion. In all cases, this disclosure presents embodiments by way of representation and not limitation. It should be understood that numerous other modifications and embodiments can be devised by those skilled in the art, which fall within the scope and spirit of the principles of the disclosure. The figures may not be drawn to scale, and applications and embodiments of the present disclosure may include features and components not specifically shown in the drawings.

### DETAILED DESCRIPTION

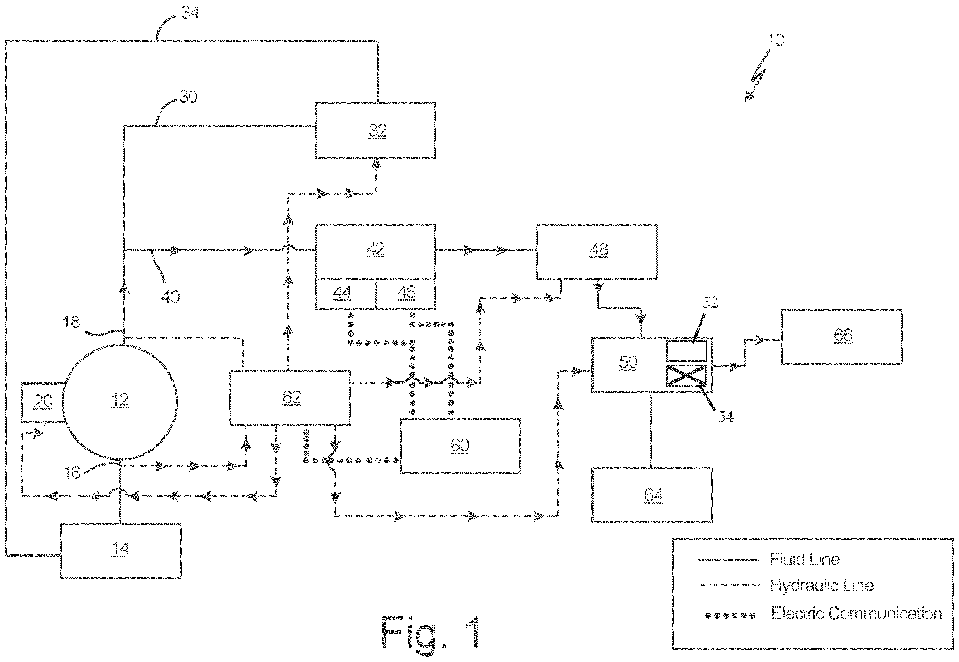

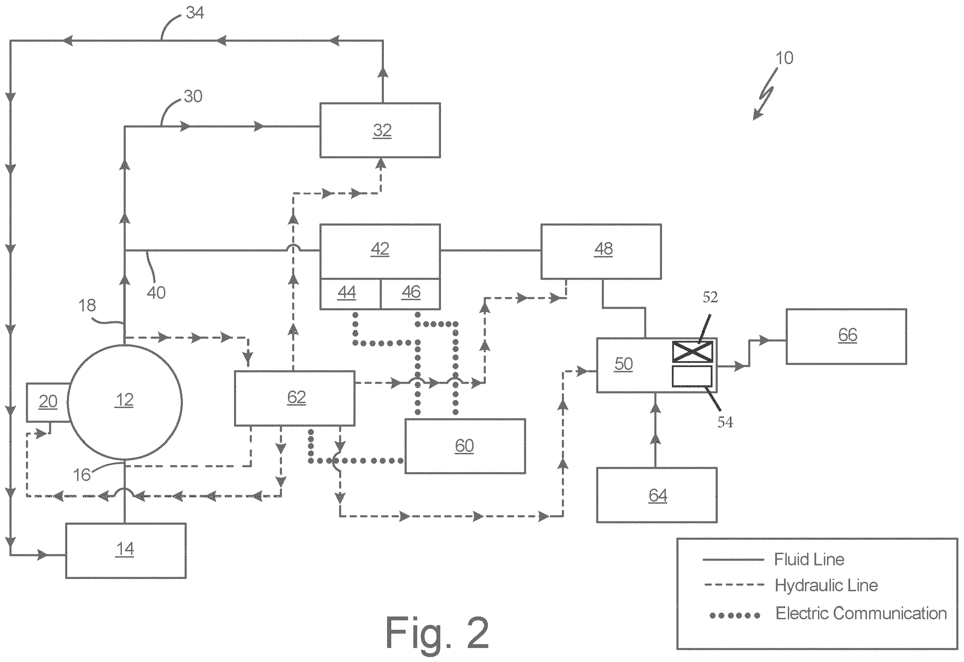

In the present disclosure, a fuel metering system includes a pump, a bypass line, a main line, an electronic engine controller, and a servo valve. The pump includes an inlet and an outlet. The main line and the bypass line are fluidically connected to the outlet of the pump. The bypass line includes a first valve. The main line includes a second valve, a third valve, and a fourth valve. The electronic engine controller is electrically connected to the servo valve and the second valve, and receives flow characteristics from the second valve. Based on the flow characteristics, the electronic engine controller sends an electrical current to the servo valve. The servo valve responds to the electrical current from the electronic engine controller to operate in a first position or a second position. The first position of the servo valve hydraulically connects the inlet of the pump to the first, third, and fourth valves to close the first valve, open the third valve, open a first window of the fourth valve, and close a second window of the fourth valve. The servo valve in the second position hydraulically connects the outlet of the pump to the first, third, and fourth valves to open the first valve, close the third valve, close the first window of the fourth valve, and open the second window of the fourth valve. The flow metering system will be discussed below with reference to FIGS. 1 and 2.

FIGS. 1 and 2 will be discussed concurrently. FIG. 1 is a schematic diagram of fuel metering system 10 with servo valve 62 in a first position. FIG. 2 is a schematic diagram of fuel metering system 10 with servo valve 62 in a second position. Fuel metering system 10 includes pump 12, first fuel source 14, bypass line 30, main line 40, electronic engine controller 60, servo valve 62, second fuel source 64, and fuel system outlet 66. Pump 12 includes inlet 16, outlet 18, and pump control 20. Bypass line 30 includes first valve 32, and recirculation line 34. Main line 40 includes second valve 42, third valve 48, and fourth valve 50. Second valve 42 includes resistance temperature detector 44 and linear variable differential transducer 46. Fourth valve 50 includes first window 52 and second window 54.

Bypass line (also referred to as first flow path) 30 contains first valve 32. In the present example, first valve 32 can be a windmill bypass valve. An example of a windmill bypass valve is disclosed in U.S. Patent No. 9,194,291 B2, which is incorporated herein by reference. In another example, first valve 32 can be any other hydraulic bypass valve that is controlled by a pressure differential. First valve 32 is fluidically connected to outlet 18 of pump 12. Recirculation line 34 fluidically connects first valve 32 to first fuel source 14. When first valve 32 is open, bypass line 30, first valve 32, and first fuel source 14 divert fuel from outlet 18 of pump 12 and return the fuel to first fuel source 14 to prevent temperature runoff of the fuel within fuel metering system 10.

Main line (also referred to as second flow path) 40 contains second valve 42, third valve 48, and fourth valve 50. Second valve 42 is fluidically connected to outlet 18 of pump 12. Second valve 42 is a flow sensing valve containing at least resistance temperature detector 44 and linear variable differential transducer 46. Resistance temperature detector 44 is configured to measure the temperature of fuel flow through second valve 42 and generate a temperature signal that is indicative of the temperature of fuel flow through second valve 42. The temperature signal can be current, voltage, or any other electrical signal. Linear variable differential transducer 46 is configured to measure the linear displacement of second valve 42 and generate a linear displacement signal that is indicative of the linear displacement of second valve 42. The linear displacement signal can be current, voltage, or any other electrical signal. In one example, second valve 42 can be the valve disclosed in U. S. Patent Pub. 2010/0251814, which is incorporated herein by reference. In another example, second valve 42 can be any other valve used to determine the flow rate of a fluid within a system. Third valve 48 is downstream from second valve 42. Third valve 48 is a minimum pressure shut off valve that is configured to maintain a minimum pressure within main line 40 upstream of third valve 48. Fourth valve 50 is downstream from third valve 48. Fourth valve 50 is a pump selector valve configured to select whether fuel from main line 40 or fuel from second fuel source 64 is fluidically connected to fuel system outlet 66.

Electronic engine controller 60 is in electrical communication with resistance temperature detector 44 and linear variable differential transducer 46. Electrical communication is defined herein as a wired and/or wireless connection. Electronic engine controller 60 is configured to receive temperature measurements of the fuel flow through second valve 42 from resistance temperature detector 44. Electronic engine controller 60 is also configured to receive linear displacement measurements of second valve 42 from linear variable differential transducer 46. In response to receiving the temperature of the fuel flow through second valve 42 and linear displacement measurements of second valve 42, electronic engine controller 60 sends an electrical current to servo valve 62.

Servo valve 62 is in electrical communication with electronic engine controller 60. Servo valve 62 is an electrohydraulic servo valve. Servo valve 62 hydraulically connects inlet 16 and outlet 18 of pump 12 to first valve 32, third valve 48, and fourth valve 50. In response to the electrical current from electronic engine controller 60, servo valve 62 can be orientated in a first position or a second position. Servo valve 62 changes from the first position to the second position in response to an electrical current sent from electronic engine controller 60 that ranges from 0 percent to 100 percent. Servo valve 62 operates in the first position when electronic engine controller 60 sends a non-zero current to servo valve 62. Servo valve 62 operates in the second position when electronic engine controller 60 sends a zero current to servo valve 62.

As shown in FIG. 1, the first position of servo valve 62 hydraulically connects inlet 16 of pump 12 to first valve 32, third valve 48, and fourth valve 50 such that a portion of fuel from inlet 16 and/or a pressure of the fuel from inlet 16 is directed to first valve 32, third valve 48, and fourth valve 50. Servo valve 62 closes first valve 32 when servo valve 62 hydraulically connects inlet 16 of pump 12 to first valve 32. Servo valve 62 opens third valve 48 when servo valve 62 hydraulically connects inlet 16 of pump 12 to third valve 48. Servo valve 62 opens first window 52 of fourth valve 50 and closes second window 54 of fourth valve 50 when servo valve 62 fluidically connects inlet 16 of pump 12 to fourth valve 50. As discussed above, fourth valve 50 is a pump selector valve. As shown in FIG. 1, when first window 52 of fourth valve 50 is open, fourth valve 50 fluidically connects pump 12 and main line 40 to fuel system outlet 66.

As shown in FIG. 2, the second position of servo valve 62 hydraulically connects outlet 18 of pump 12 to first valve 32, third valve 48, and fourth valve 50 such that a portion of fuel from outlet 18 and/or a pressure of the fuel from outlet 18 is directed to first valve 32, third valve 48, and fourth valve 50. Servo valve 62 opens first valve 32 when servo valve 62 hydraulically connects outlet 18 of pump 12 to first valve 32. Servo valve 62 closes third valve 48 when servo valve 62 hydraulically connects outlet 18 of pump 12 to third valve 48. Servo valve 62 closes first window 52 of fourth valve 50 and opens second window 54 of fourth valve 50 when servo valve 62 hydraulically connects outlet 18 of pump 12 to fourth valve 50. As shown in FIG. 2, when second window 54 of fourth valve 50 is open, fourth valve 50 fluidically connects second fuel source 64 and a pumping system of the second fluid source (not pictured) to fuel system outlet 66. Fuel system outlet 66, which is downstream from fourth valve 50, can be a fuel nozzle or injector in an engine.

Pump 12 is a variable displacement pump. Inlet 16 of pump 12 is fluidically connected to first fuel source 14. Pump control 20 is mechanically connected to pump 12 and is in hydraulic communication with servo valve 62. Servo valve 62 is configured to control pump control 20 to change the displacement of pump 12. In the present example, pump control 20 is a swashplate. In another example, pump control 20 can be any other controlling mechanism for variable displacement pumps. In the present example, servo valve 62 is an electrohydraulic servo valve. In another example, servo valve 62 can be an electronic servo valve or any other kind of servo valve.

In operation, fuel metering system 10 senses a linear displacement and a temperature of a fuel flow in main line 40 with resistance temperature detector 44 and linear variable differential transducer 46 of second valve 42. Resistance temperature detector 44 generates a resistance signal that is indicative of the temperature of a fuel flow in main line 40. The temperature signal can be current, voltage, or any other electrical signal. Linear variable differential transducer 46 generates a linear displacement signal that is indicative of the linear displacement of second valve 42. The linear displacement signal can be current, voltage, or any other electrical signal. Resistance temperature detector 44 and linear variable differential transducer 46 communicate the temperature signal that is indicative of the fuel flow in main line 40 and linear displacement signal that is indicative of second valve 42 to electronic engine controller 60. Electronic engine controller 60 communicates a first electronic signal to servo valve 62. In response to the first electronic signal, servo valve 62 moves to the first position. When in the first position servo valve 62 communicates fuel pressure from inlet 16 of pump 12 to third valve 48 to open third valve 48. Additionally, when in the first position, servo valve 62 communicates fuel pressure from inlet 16 of pump 12 to first valve 32 to close first valve 32 and block the fuel flow from entering recirculation line 34. Further, when in the first position, servo valve 62 communicates fuel pressure from inlet 16 of pump 12 to fourth valve 50 to open first window 52 of fourth valve 50 and close second window 54 of fourth valve 50. As discussed above, when first window 52 of fourth valve 50 is open and second window 54 of fourth valve 50 is closed fourth valve 50 fluidically connects first fuel source 14 and main line 40 to fuel system outlet 66.

Fuel metering system 10 is configured to operate with servo valve 62 in the first position as a default position. One example of when electronic engine controller 60 sends the first signal to servo valve 62 is in response to an engine start-up sequence. During standard operating conditions, e.g., expected temperature of flow through second valve 42 and linear displacement of second valve 42, servo valve 62 maintains the first position. Further, the current sent from electronic engine controller 60 controls a pumping rate of pump 12. For example, to increase the pumping rate of pump 12, electronic engine controller 60 increases the current sent to servo valve 62. In response to the increased current, servo valve 62 increases a hydraulic fluid sent to pump control 20 to increase the pumping rate of pump 12. In response to irregular conditions, e.g., a high temperature of fuel flow through second valve 42 and/or insufficient linear displacement of second valve 42 electronic engine controller 60 sends a second electronic signal.

In response to servo valve 62 receiving the second electronic signal from electronic engine controller 60 servo valve 62 moves to the second position. When servo valve 62 is in the second position, servo valve 62 communicates fuel pressure from outlet 18 of pump 12 to third valve 48 to close third valve 48 and block the fuel flow from pump 12 from reaching fuel system outlet 66. When servo valve 62 is in the second position, servo valve 62 also communicates fuel pressure from outlet 18 of pump 12 to first valve 32 to open first valve 32 and allow the fuel flow from pump 12 to enter recirculation 34 and return to first fuel source 14. Additionally, when servo valve 62 is in the second position, servo valve 62 communicates fuel pressure from outlet 18 of pump 12 to fourth valve 50 to close first window 52 of fourth valve 50 and open second window 54 of fourth valve 50. As discussed above, when first window 52 of fourth valve 50 is closed and second window 54 of fourth valve 50 is open fourth valve 50 fluidically connects second fluid source 64 and the pumping system of the second fluid source to fuel system outlet 66.

### Discussion of Possible Embodiments

The following are non-exclusive descriptions of possible embodiments of the present invention.

A fuel metering system includes a pump with an inlet and an outlet and a first fuel source fluidically connected to the inlet of the pump. A first flow path including a first valve fluidically connected to the outlet of the pump, and a second flow path. The second flow path includes a second valve fluidically connected to the outlet of the pump, a third valve downstream from the second valve, and a fourth valve downstream from the third valve. The fuel metering system also includes an electrohydraulic servo valve hydraulically connecting the inlet and the outlet of the pump to the first, third, and fourth valves. The electrohydraulic servo valve in a first position hydraulically connects the inlet of the pump to the first, third, and fourth valves to close the first valve, open the third valve, open a first window of the fourth valve, and close a second window of the fourth valve. The electrohydraulic servo valve in a second position hydraulically connects the outlet of the pump to the first, third, and fourth valves to open the first valve, close the third valve, close the first window of the fourth valve, and open the second window of the fourth valve.

The fuel metering system of the preceding paragraph can optionally include, additionally and/or alternatively, any one or more of the following features, configurations and/or additional components:
wherein the second valve is a flow sensing valve comprising a resistance temperature detector configured to measure the temperature of fuel flow through the second valve and generate a temperature signal that is indicative of the temperature of fuel flow through the second valve; and a linear variable differential transducer configured to measure the linear displacement of the second valve and generate a linear displacement signal that is indicative of the linear displacement of the second valve;
further comprising: an electronic engine controller in electrical communication with the resistance temperature detector, the linear variable differential transducer, and the electrohydraulic servo valve, wherein the electronic engine controller is configured to receive the temperature signal that is indicative of the temperature of the fuel flow through the second valve from the resistance temperature detector and the linear displacement signal that is indicative of the linear displacement of the second valve from the linear variable differential transducer and configured to send a current to the electrohydraulic servo valve;
wherein the pump is a variable displacement pump and the electrohydraulic servo valve is hydraulically connected to a pump control of the variable displacement pump;
wherein the third valve is a minimum pressure shut off valve;
further comprising a fuel nozzle downstream from the fourth valve;
wherein the fourth valve is a pump selector valve that is fluidically connected to a second fuel source, wherein the first window of the fourth valve when open fluidically connects the pump and the first fuel source to the fuel nozzle, and wherein the second window of the fourth valve fluidically connects the second fuel source to the fuel nozzle when open;
wherein the first flow path is a recirculation line that fluidically connects the outlet of the pump to the first fuel source and the first valve is a bypass valve fluidically between the outlet of the pump and the first fuel source; and/or
wherein the first valve is a windmill bypass valve.

A fuel system includes a variable displacement pump with an inlet and an outlet, a main line, and a bypass line. The main line includes a flow sensing valve fluidically connected to the outlet of the variable displacement pump, and a minimum pressure shut off valve downstream from the flow sensing valve. The bypass line includes a bypass valve fluidically connected to the outlet of the variable displacement pump. The fuel system also includes an electrohydraulic servo valve in communication with the flow sensing valve and hydraulically communicating the inlet and the outlet of the variable displacement pump with the bypass valve and the minimum pressure shut off valve. The electrohydraulic servo valve in a first position hydraulically connects the inlet of the variable displacement pump to the bypass valve and the minimum pressure shut off valve to close the bypass valve and open the minimum pressure shut off valve. The electrohydraulic servo valve in a second position hydraulically connects the outlet of the variable displacement pump to the bypass valve and the minimum pressure shut off valve to open the bypass valve and close the minimum pressure shut off valve.

The fuel system of the preceding paragraph can optionally include, additionally and/or alternatively, any one or more of the following features, configurations and/or additional components:
wherein the main line further comprises: a pump selector valve downstream from the minimum pressure shut off valve, and wherein the electrohydraulic servo valve hydraulically connects the inlet and the outlet of the variable displacement pump to the pump selector valve, wherein the electrohydraulic servo valve in a first position hydraulically connects the inlet of the variable displacement pump to the pump selector valve to open a first window of the pump selector valve and close a second window of the pump selector valve, and wherein the electrohydraulic servo valve in a second position hydraulically connects the outlet of the variable displacement pump to the pump selector valve to close the first window of the pump selector valve and open the second window of the pump selector valve;
a fuel nozzle downstream from the pump selector valve; and a first fuel source fluidically connected to the inlet of the pump, wherein: the pump selector valve is fluidically connected to a second fuel source; the first window of the pump selector valve when open fluidically connects the variable displacement pump and the first fuel source to the fuel nozzle; and the second window of the pump selector valve fluidically connects the second fuel source to the fuel nozzle when open;
wherein the flow sensing valve comprises: a resistance temperature detector configured to measure the temperature of fuel flow through the flow sensing valve and generate a temperature signal that is indicative of the temperature of fuel flow through the flow sensing valve; and a linear variable differential transducer configured to measure the linear displacement of the flow sensing valve and generate a linear displacement signal that is indicative of the linear displacement of the flow sensing valve;
an electronic engine controller in electrical communication with the resistance temperature detector, the linear variable differential transducer, and the electrohydraulic servo valve, wherein the electronic engine controller is configured to receive the temperature of the fuel flow through the flow sensing valve from the resistance temperature detector and the linear displacement of the flow sensing valve from the linear variable differential transducer and configured to send a current to the electrohydraulic servo valve; and/or
the electrohydraulic servo valve is hydraulically connected to a pump control of the variable displacement pump.

A method of metering a flow of fuel within in a system includes sensing a temperature of a fuel flow in a main line by a flow sensing valve in the main line downstream from an outlet of a variable displacement pump. Generating a temperature signal that is indicative of the temperature of the fuel flow in the main line with the flow sensing valve with the flow sensing valve. Sensing a linear displacement of the flow sensing valve. Generating with the flow sensing valve a linear displacement signal that is indicative of the linear displacement of the flow sensing valve. The temperature signal that is indicative of the temperature of the fuel flow in the main line is communicated to an electronic engine controller. The linear displacement signal of the linear displacement of the flow sensing valve is communicated to the electronic engine controller. The method also includes communicating a first electronic signal by the electronic engine controller to an electrohydraulic servo valve. The electrohydraulic servo valve hydraulically communicates with an inlet of the variable displacement pump, the outlet of the variable displacement pump, a minimum pressure shut off valve in the main line downstream from the flow sensing valve, and a bypass valve in a bypass line fluidically connected to the outlet of the variable displacement pump. The electrohydraulic servo valve is moved to a first position in response to the first electronic signal. An inlet pressure of the variable displacement pump is communicated by the electrohydraulic servo valve to the minimum pressure shut off valve to open the minimum pressure shut off valve while the electrohydraulic servo valve is in the first position. The inlet pressure of the variable displacement pump is communicated by the electrohydraulic servo valve to the bypass valve to close the bypass valve while the electrohydraulic servo valve is in the first position.

The method of the preceding paragraph can optionally include, additionally and/or alternatively, any one or more of the following features, configurations and/or additional components:
communicating a second electronic signal by the electronic engine controller to the electrohydraulic servo valve; moving the electrohydraulic servo valve to a second position in response to the second electronic signal; communicating an outlet pressure of the variable displacement pump by the electrohydraulic servo valve to the minimum pressure shut off valve to close the minimum pressure shut off valve while the electrohydraulic servo valve is in the second position; and communicating the outlet pressure of the variable displacement pump by the electrohydraulic servo valve to the bypass valve to open the bypass valve while the electrohydraulic servo valve is in the second position;
communicating the inlet pressure of the variable displacement pump by the electrohydraulic servo valve to a pump selector valve in the main line downstream from the minimum pressure shut off valve while the electrohydraulic servo valve is in the first position; opening a first window of the pump selector valve in response to the inlet pressure communicated by the electrohydraulic servo valve to the pump selector valve; and closing a second window of the pump selector valve in response to the inlet pressure communicated by the electrohydraulic servo valve to the pump selector valve;
communicating the outlet pressure of the variable displacement pump by the electrohydraulic servo valve to the pump selector valve while the electrohydraulic servo valve is in the second position; closing the first window of the pump selector valve in response to the outlet pressure communicated by the electrohydraulic servo valve to the pump selector valve; and opening a second window of the pump selector valve in response to the outlet pressure communicated by the electrohydraulic servo valve to the pump selector valve; and/or
directing a first fuel source from the variable displacement pump through the main line, through the first window of the pump selector valve, and to a fuel nozzle when the electrohydraulic servo valve is in the first position; and directing a second fuel source from a second pump through the second window of the pump selector valve and to the fuel nozzle when the electrohydraulic servo valve is in the second position.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A fuel metering system comprising:
a pump (12) comprising an inlet and an outlet;
a first fuel source (14) fluidically connected to the inlet of the pump (12);
a first flow path (30) comprising:
a first valve fluidically connected to the outlet of the pump (12);
a second flow path (40) comprising:
a second valve fluidically connected to the outlet of the pump (12);
a third valve downstream from the second valve; and
a fourth valve downstream from the third valve; and
an electrohydraulic servo valve hydraulically connecting the inlet and the outlet of the pump (12) to the first, third, and fourth valves, wherein the electrohydraulic servo valve in a first position hydraulically connects the inlet of the pump (12) to the first, third, and fourth valves to close the first valve, open the third valve, open a first window of the fourth valve, and close a second window of the fourth valve, and wherein the electrohydraulic servo valve in a second position hydraulically connects the outlet of the pump (12) to the first, third, and fourth valves to open the first valve, close the third valve, close the first window of the fourth valve, and open the second window of the fourth valve.

2. The fuel metering system of claim 1, wherein the second valve is a flow sensing valve comprising:
a resistance temperature detector configured to measure the temperature of fuel flow through the second valve and generate a temperature signal that is indicative of the temperature of fuel flow through the second valve; and
a linear variable differential transducer configured to measure the linear displacement of the second valve and generate a linear displacement signal that is indicative of the linear displacement of the second valve.

3. The fuel metering system of claim 2, further comprising:
an electronic engine controller in electrical communication with the resistance temperature detector, the linear variable differential transducer, and the electrohydraulic servo valve, wherein the electronic engine controller is configured to receive the temperature signal that is indicative of the temperature of the fuel flow through the second valve from the resistance temperature detector and the linear displacement signal that is indicative of the linear displacement of the second valve from the linear variable differential transducer and configured to send a current to the electrohydraulic servo valve.

4. The fuel metering system of claim 3, wherein the pump (12) is a variable displacement pump (12) and the electrohydraulic servo valve is hydraulically connected to a pump control of the variable displacement pump (12).

5. The fuel metering system of claim 4, wherein the third valve is a minimum pressure shut off valve, and optionally further comprising a fuel nozzle downstream from the fourth valve, and optionally wherein the fourth valve is a pump selector valve that is fluidically connected to a second fuel source, wherein the first window of the fourth valve when open fluidically connects the pump (12) and the first fuel source (14) to the fuel nozzle, and wherein the second window of the fourth valve fluidically connects the second fuel source to the fuel nozzle when open.

6. The fuel metering system of any preceding claim, wherein the first flow path (30) is a recirculation line that fluidically connects the outlet of the pump (12) to the first fuel source (14) and the first valve is a bypass valve fluidically between the outlet of the pump (12) and the first fuel source (14), and optionally wherein the first valve is a windmill bypass valve.

7. A fuel system comprising:
a variable displacement pump (12) comprising an inlet and an outlet;
a main line comprising:
a flow sensing valve fluidically connected to the outlet of the variable displacement pump (12); and
a minimum pressure shut off valve downstream from the flow sensing valve;
a bypass line comprising:
a bypass valve fluidically connected to the outlet of the variable displacement pump (12); and
an electrohydraulic servo valve in communication with the flow sensing valve and hydraulically communicating the inlet and the outlet of the variable displacement pump (12) with the bypass valve and the minimum pressure shut off valve, wherein the electrohydraulic servo valve in a first position hydraulically connects the inlet of the variable displacement pump (12) to the bypass valve and the minimum pressure shut off valve to close the bypass valve and open the minimum pressure shut off valve, and wherein the electrohydraulic servo valve in a second position hydraulically connects the outlet of the variable displacement pump (12) to the bypass valve and the minimum pressure shut off valve to open the bypass valve and close the minimum pressure shut off valve.

8. The fuel system of claim 7, wherein the main line further comprises:
a pump selector valve downstream from the minimum pressure shut off valve, and
wherein the electrohydraulic servo valve hydraulically connects the inlet and the outlet of the variable displacement pump (12) to the pump selector valve, wherein the electrohydraulic servo valve in a first position hydraulically connects the inlet of the variable displacement pump (12) to the pump selector valve to open a first window of the pump selector valve and close a second window of the pump selector valve, and wherein the electrohydraulic servo valve in a second position hydraulically connects the outlet of the variable displacement pump (12) to the pump selector valve to close the first window of the pump selector valve and open the second window of the pump selector valve.

9. The fuel system of claim 8 further comprising:
a fuel nozzle downstream from the pump selector valve; and
a first fuel source (14) fluidically connected to the inlet of the pump,
wherein:
the pump selector valve is fluidically connected to a second fuel source;
the first window of the pump selector valve when open fluidically connects the variable displacement pump and the first fuel source (14) to the fuel nozzle; and
the second window of the pump selector valve fluidically connects the second fuel source to the fuel nozzle when open.

10. The fuel system of claim 8, wherein the flow sensing valve comprises:
a resistance temperature detector configured to measure the temperature of fuel flow through the flow sensing valve and generate a temperature signal that is indicative of the temperature of fuel flow through the flow sensing valve; and
a linear variable differential transducer configured to measure the linear displacement of the flow sensing valve and generate a linear displacement signal that is indicative of the linear displacement of the flow sensing valve.

11. The fuel system of claim 10 further comprising:
an electronic engine controller in electrical communication with the resistance temperature detector, the linear variable differential transducer, and the electrohydraulic servo valve, wherein the electronic engine controller is configured to receive the temperature of the fuel flow through the flow sensing valve from the resistance temperature detector and the linear displacement of the flow sensing valve from the linear variable differential transducer and configured to send a current to the electrohydraulic servo valve, and optionally wherein the electrohydraulic servo valve is hydraulically connected to a pump control of the variable displacement pump.

12. A method of metering a flow of fuel within in a system comprising:
sensing a temperature of a fuel flow in a main line by a flow sensing valve in the main line downstream from an outlet of a variable displacement pump;
generating a temperature signal that is indicative of the temperature of the fuel flow in the main line with the flow sensing valve;
sensing a linear displacement of the flow sensing valve;
generating a linear displacement signal that is indicative of the linear displacement of the flow sensing valve;
communicating the temperature signal that is indicative of the temperature of the fuel flow in the main line to an electronic engine controller;
communicating the linear displacement signal indicative of the linear displacement of the flow sensing valve to the electronic engine controller;
communicating a first electronic signal by the electronic engine controller to an electrohydraulic servo valve, wherein the electrohydraulic servo valve hydraulically communicates with an inlet of the variable displacement pump, the outlet of the variable displacement pump, a minimum pressure shut off valve in the main line downstream from the flow sensing valve, and a bypass valve in a bypass line fluidically connected to the outlet of the variable displacement pump;
moving the electrohydraulic servo valve to a first position in response to the first electronic signal;
communicating an inlet pressure of the variable displacement pump by the electrohydraulic servo valve to the minimum pressure shut off valve to open the minimum pressure shut off valve while the electrohydraulic servo valve is in the first position; and
communicating the inlet pressure of the variable displacement pump by the electrohydraulic servo valve to the bypass valve to close the bypass valve while the electrohydraulic servo valve is in the first position.

13. The method of claim 12, further comprising:
communicating a second electronic signal by the electronic engine controller to the electrohydraulic servo valve;
moving the electrohydraulic servo valve to a second position in response to the second electronic signal;
communicating an outlet pressure of the variable displacement pump by the electrohydraulic servo valve to the minimum pressure shut off valve to close the minimum pressure shut off valve while the electrohydraulic servo valve is in the second position; and
communicating the outlet pressure of the variable displacement pump by the electrohydraulic servo valve to the bypass valve to open the bypass valve while the electrohydraulic servo valve is in the second position.

14. The method of claim 13, further comprising:
communicating the inlet pressure of the variable displacement pump by the electrohydraulic servo valve to a pump selector valve in the main line downstream from the minimum pressure shut off valve while the electrohydraulic servo valve is in the first position;
opening a first window of the pump selector valve in response to the inlet pressure communicated by the electrohydraulic servo valve to the pump selector valve; and
closing a second window of the pump selector valve in response to the inlet pressure communicated by the electrohydraulic servo valve to the pump selector valve.

15. The method of claim 14, further comprising:
communicating the outlet pressure of the variable displacement pump by the electrohydraulic servo valve to the pump selector valve while the electrohydraulic servo valve is in the second position;
closing the first window of the pump selector valve in response to the outlet pressure communicated by the electrohydraulic servo valve to the pump selector valve; and
opening a second window of the pump selector valve in response to the outlet pressure communicated by the electrohydraulic servo valve to the pump selector valve, and optionally further comprising:
directing a first fuel source (14) from the variable displacement pump through the main line, through the first window of the pump selector valve, and to a fuel nozzle when the electrohydraulic servo valve is in the first position; and directing a second fuel source from a second pump through the second window of the pump selector valve and to the fuel nozzle when the electrohydraulic servo valve is in the second position.
